# EUROPÄISCHE PATENTSCHRIFT

(11) **EP 3 449 655 B1**
(45) Veröffentlichungstag und Bekanntmachung des Hinweises auf die Patenterteilung: **18.05.2022**
(21) Anmeldenummer: 17715656.9
(22) Anmeldetag: 30.03.2017
(51) Int. Cl.: G06F 21/44, G06F 21/35, G06F 21/30, H04L 9/40, H04W 4/40, H04W 4/80, H04W 12/041, H04W 12/065, H04W 12/06

(54) **VERFAHREN ZUR SICHEREN INTERAKTION EINES NUTZERS MIT EINEM MOBILEN ENDGERÄT UND EINER WEITEREN INSTANZ**
METHOD FOR THE SECURE INTERACTION OF A USER WITH A MOBILE TERMINAL AND A FURTHER ENTITY
PROCÉDÉ D'INTERACTION SÉCURISÉE D'UN UTILISATEUR AVEC UN TERMINAL MOBILE ET UNE AUTRE ENTITÉ

(30) Priorität: 29.04.2016 DE 102016207339
(43) Veröffentlichungstag der Anmeldung: 06.03.2019
(73) Patentinhaber: Volkswagen Aktiengesellschaft, 38440 Wolfsburg (DE)
(72) Erfinder: BARTELS, Bastian, 38442 Wolfsburg (DE)
(86) Internationale Anmeldenummer: PCT/EP2017/057509
(87) Internationale Veröffentlichungsnummer: WO 2017/186445

(56) Entgegenhaltungen:
- US-A1- 2013 263 215
- US-A1- 2014 270 172
- US-A1- 2015 137 943
- US-A1- 2016 012 653
- Anonymous: "How to Bypass Windows XP Login Passwords From Scratch: 6 Steps", , 1. Januar 2008 (2008-01-01), XP055371886, Gefunden im Internet: URL:http://www.instructables.com/id/How-to -bypass-Windows-XP-login-passwords-from-sc ra/ [gefunden am 2017-05-11]
- Anonymous: "Communication with submarines - Wikipedia", , 14. April 2016 (2016-04-14), XP055371942, Gefunden im Internet: URL:https://en.wikipedia.org/w/index.php?t itle=Communication_with_submarines&oldid=7 15170392 [gefunden am 2017-05-11]

## Beschreibung

Die Erfindung betrifft ein Verfahren und ein System zur sicheren Interaktion eines Nutzers mit einem mobilen Endgerät und einer weiteren Instanz.

Bei der Verwendung beliebiger mobiler Endgeräte wie zum Beispiel Smartphones für eine sichere Kommunikation mit einem Fahrzeug gibt es hochkritische Anwendungsgebiete, die ein besonderes Sicherheits-Design erfordern. Verwendet man das mobile Endgerät beispielsweise als Fahrzeugschlüssel, ist der IT-Sicherheitsanspruch sehr hoch. In diesem Fall sind neben dem mobilen Endgerät, dem Fahrzeug auch noch ein Schlüsselverwaltungssystem, das zumeist in einem entfernten Backend angeordnet ist, Komponenten des Gesamtsystems. Sowohl die einzelnen Komponenten als auch deren Kommunikationsverbindungen müssen entsprechenden Sicherheitsrichtlinien genügen.

Es gibt verschiedene sichere Ausführungsumgebungen auf modernen mobilen Endgeräten. Neben softwarebasierten Lösungen existieren grundlegend zwei verschiedene Arten hardwarebasierter sicherer Ausführungsumgebungen: Secure Element (Sicheres Element oder Sicherheitsmodul), zum Beispiel in Form einer SIM-Karte oder eines eingebetteten sicheren Chips (embedded Secure Element), und Trusted Execution Environment (geschützte Ausführungsumgebung), zum Beispiel als sicherer Bereich eines Prozessors.

EP 2 713 328 A1 offenbart ein Mobilgerät mit einem sicheren Prozessor, wie einem Trusted Execution Environment oder einem Secure Element, eingerichtet zur sicheren Gestenerkennung.

GB 2526540 A offenbart ein Mobilgerät mit einem Secure Element, in welches bei der Produktion kryptographische Schlüssel für eine spätere Nutzung durch zu installierende Programme eingebracht werden.

US 2014/0317686 A1 offenbart ein Mobilgerät mit einem verteilten Trusted Execution Environment bestehend aus zwei Komponenten, nämlich einem Trusted Execution Environment in einem Secure Element und einem Trusted Execution Environment Proxy, welcher auf dem Mobilgerät ausgeführt wird.

US-Patentanmeldung 2015/0137943 A1 zeigt ein System zum Steuern eines Zugangs oder einer Fahrerlaubnis eines Fahrzeugs, das ein Mobilgerät und eine Steuereinheit im Fahrzeug umfasst, wobei die Steuereinheit Berechtigungsdaten überprüft, die von dem Mobilgerät gesendet werden.

US-Patentanmeldung 2016/0012653 A1 offenbart eine Vorrichtung, Systeme und Verfahren, die die Eingaben eines Fahrzeugbenutzers nutzen, um einen logischen Kontext der legitimen Fahrzeugnutzung durch eine Fernzugriffsvorrichtung bereitzustellen, um das Fahrzeug vor Diebstahl zu schützen.

US-Patentanmeldung 2014/0270172 A1 offenbart ein System und ein Verfahren, um einen sicheren Kommunikationskanal zwischen einem Fahrzeug und einer mobilen Vorrichtung herzustellen.

US-Patentanmeldung 2013/0263215 A1 befasst sich mit der Bildschirmgeschützten Authentifizierung. In der Patentanmeldung wird ein Authentifizierungsbild übertragen und angezeigt, anhand dessen der Benutzer erkennen kann, dass er sich in einem sogenannten "Trusted User Interface" befindet. Dabei kann das Bild beispielsweise animiert werden, um die Sicherheit weiter zu erhöhen.

Der Erfindung liegt nun die Aufgabe zugrunde, eine vollständige Sicherheitskette aller an der Interaktion beteiligten Entitäten auf einfache und zuverlässige Weise bereitzustellen.

Diese Aufgabe wird gelöst durch ein Verfahren gemäß Anspruch 1 beziehungsweise ein System gemäß Anspruch 7.

Das erfindungsgemäße Verfahren zur sicheren Interaktion eines Nutzers mit einem mobilen Endgerät und einer weiteren Instanz, umfasst die Schritte:
- Übertragen eines Geheimnisses oder einer durch eine Einwegfunktion erzeugten Abbildung des Geheimnisses und eines individuellen Datums von dem Nutzer an ein Backend;
- Übertragen der Abbildung und des individuellen Datums von dem Backend an eine geschützte Ausführungsumgebung eines Prozessors des mobilen Endgeräts;
- Anmelden des Nutzers an einer sicheren Benutzerschnittstelle des mobilen Endgeräts, wobei dem Nutzer das individuelle Datum angezeigt wird und wobei der Nutzer sich mit dem Geheimnis authentisiert;
- Interaktion des Nutzers mit einem sicheren Element des mobilen Endgeräts, welches mit der geschützten Ausführungsumgebung eine sichere Verbindung aufweist, über die sichere Benutzerschnittstelle und die geschützte Ausführungsumgebung; und
- Interaktion des sicheren Elements mit der weiteren Instanz über eine gesicherte Verbindung.

Das erfindungsgemäße Verfahren hat den Vorteil, dass mindestens ein mobiles Endgerät in ein ganzheitliches Sicherheitsmodell zur Kommunikation mit einem Backend und mindestens einer weiteren Instanz, wie zum Beispiel einem Fahrzeug, eingefügt wird. Dadurch wird eine geschlossene Vertrauenskette aller Entitäten in verteilten Systemen zur Erlangung eines sicheren Gesamtsystems geschaffen. Durch die beidseitige Authentifikation zwischen Nutzer und Benutzeroberfläche des mobilen Endgerätes, zwischen Benutzeroberfläche des mobilen Endgerätes und dem sicheren Element, zwischen dem sicheren Element und dem Backend, sowie zwischen dem sicheren Element und der weiteren Instanz wird eine geschlossene Sicherheitskette gewährleistet. Da die gesamte Kette an Authentifikationen in einem geschlossenen, sicheren Kontext erfolgt, ist eine optimale IT-Sicherheit dieses Gesamtsystems gewährleistet.

Als Interaktion werden hier Aktionen wie zum Beispiel der Zugang wie Öffnen/Schließen, das Betätigen von Funktionen, wie zum Beispiel Anlassen, Navigation starten und auch eine uni- oder bidirektionale Kommunikation angesehen. Das sichere Element (SE, Secure Element) kann eine eigenständige Recheneinheit wie zum Beispiel einen Mikrocontroller mit eigenem Betriebssystem umfassen oder es kann die Form einer SIM-Karte oder eines eingebetteten sicheren Chips haben. Die geschützte Ausführungsumgebung (TEE, Trusted Execution Environment) stellt eine sichere oder vertrauenswürdige Laufzeitumgebung für Anwendungen bereit. Die geschützte Ausführungsumgebung kann auf einem separaten Prozessor, auf dem oder den Hauptprozessoren eines Computersystems oder in einem Die eines Multiprozessor-Systems beziehungsweise eines Ein-Chip-System (SoC) ausgeführt werden beziehungsweise implementiert werden. Die Einwegfunktion erzeugt eine Abbildung wie zum Beispiel einen Hashwert.

Während sichere Elemente den Vorteil haben, dass sie als tamper-resistant gelten und damit besondere Vorkehrungen gegenüber invasiven Angriffen, wie zum Beispiel lonenbeschuss, Manipulation von Leiterbahnen durch Ätzen oder Abschleifen, treffen, haben geschützte Ausführungsumgebungen den Vorteil, theoretisch mit den Ressourcen des gesamten Systems oder SoCs des mobilen Endgeräts arbeiten zu können. Da geschützte Ausführungsumgebungen in der Lage sind, alle möglichen Hardwarekomponenten als sichere Geräte zu deklarieren und somit unterscheiden können, ob Daten von einem als sicher oder unsicher eingestuftem Peripheriegerät bereitgestellt wurden, lässt sich zum Beispiel das Feature "Trusted User Interface" realisieren. Dies bedeutet, dass zum Beispiel die Ein- und Ausgabemöglichkeit eines mobilen Endgeräts wie ein Touchscreen kontextabhängig zu einem sicheren Gerät erklärt werden kann und sämtliche Benutzereingaben nicht mehr vom unsicheren Betriebssystemkernel gesehen werden. Dies kann zum Beispiel dafür genutzt werden, um den Kundenlogin an einer Bank-Webseite abzusichern, in dem das Passwort erst dann einzugeben wird, wenn der Touchscreen vom unsicheren Kernel entkoppelt ist und vollständig an den sicheren Kernel angekoppelt ist. Hier werden die sich ergänzenden Vorteile beider Technologien kombiniert, um für die Interaktion zwischen mobilem Endgerät und der weiteren Instanz, wie zum Beispiel einem Fahrzeug, das Sicherheitsniveau zu erhöhen. Konkreter können entweder über die Bedatungsprozesse von dem sicheren Element und der geschützten Ausführungsumgebung individuelle kryptographische Schlüssel (entweder asymmetrisch oder symmetrisch) eingebracht werden auf Basis derer das sichere Element mit der geschützte Ausführungsumgebung bidirektional sicher kommunizieren kann. Oder das sichere Element wird nativ von der geschützten Ausführungsumgebung unterstützt.

Es kann vorgesehen sein, dass die sichere Benutzerschnittstelle von der geschützten Ausführungsumgebung als sicheres Gerät deklariert wird. Auf diese Weise kann die Eigenschaft der geschützten Ausführungsumgebung, Geräte oder Komponenten als sicher zu deklarieren und anzubinden genutzt werden, was eine große Flexibilität erlaubt. Die Benutzerschnittstelle kann zum Beispiel ein Touchscreen eines Mobiltelefons sein. Es wird eine sichere Eingabemöglichkeit geschaffen. Dazu kann zum Beispiel die geschützte Ausführungsumgebung im sicheren Bereich eine virtuelle Maschine für die sichere Benutzerschnittstelle, auch TUI (Trusted User Interface) genannt, anlegen und/oder betreiben. So kann unter anderem sicher gestellt werden, dass ein Framebuffer nur im sicheren Kontext bleibt, also nicht unberechtigt ausgelesen werden kann.

Es kann weiter vorgesehen sein, dass die Verbindung zwischen der geschützten Ausführungsumgebung und dem sicheren Element mittels aus dem Backend bezogener Schlüssel geschützt wird. Dies kann eine symmetrische oder asymmetrische Verschlüsselung sein. Da die Schlüssel aus dem Backend stammen, wo eine sichere Ableitung oder Erzeugung garantiert ist, ist ein hoher Sicherheitsstandard gegeben. Zudem müssen so weder die geschützte Ausführungsumgebung noch das sichere Element die für eine Ableitung oder Erzeugung der Schlüssel notwendige Hard- oder Software aufweisen.

Es kann ferner vorgesehen sein, dass in einem Betriebssystem des mobilen Endgeräts ein Programm zur Interaktion mit der weiteren Instanz ausgeführt wird und dass das Programm über das sichere Element mit der weiteren Instanz interagiert. Dieses Programm, wie zum Beispiel eine App, kann zur Steuerung von Funktionen der weiteren Instanz dienen. Da das Betriebssystem des mobilen Endgeräts üblicherweise nicht als sicher gelten kann, kann über die Proxyfunktion des sicheren Elements trotzdem eine sichere Verbindung zwischen dem Programm und der weiteren Instanz aufgebaut werden, zum Beispiel um Funktionen der weiteren Instanz sicher zu bedienen.

Zwischen dem Backend und dem Programm kann eine über das sichere Element laufende sichere Verbindung aufgebaut werden. Da das Betriebssystem des mobilen Endgeräts üblicherweise nicht als sicher gelten kann, kann über die Proxyfunktion des sicheren Elements trotzdem eine sichere Verbindung zwischen dem Programm und dem Backend aufgebaut werden, zum Beispiel um Daten auszutauschen, Berechtigungen zu verwalten oder Updates und weitere Software-Installationen auszuführen.

Es kann vorgesehen sein, dass das sichere Element eine Kommunikationsschnittstelle für das Programm und eine Kommunikationsschnittstelle für die weitere Instanz aufweist und dass in Abhängigkeit von der Interaktion des Nutzers die Fähigkeiten mindestens einer Kommunikationsschnittstelle konfiguriert werden. So kann zum Beispiel vorgesehen sein, dass nach einer Eingabe oder Anmeldung des Nutzers nur eine oder beide Kommunikationsschnittstellen für einen bestimmten Zeitraum, zum Beispiel von wenigen Minuten Daten senden beziehungsweise empfangen kann. Dies kann die Sicherheit durch eine Verringerung von Angriffsmöglichkeiten erhöhen. Die Kommunikationsschnittstelle kann logisch sein, zum Beispiel in Form eines Ports oder Protokollstacks, die dann mit einer physikalischen Schnittstelle wie zum Beispiel einem NFC-Controller in Verbindung steht. Andererseits kann die Kommunikationsschnittstelle eine physikalische Schnittstelle wie zum Beispiel einen NFC-Controller umfassen.

Es kann ferner vorgesehen sein, dass für eine sichere Kommunikation zwischen dem mobilen Endgerät und der weiteren Instanz ein Schlüssel in dem Backend und in der weiteren Instanz vorhanden ist, dass eine Ableitung des Schlüssels in das sichere Element eingebracht wird und dass für eine authentische Verbindung eine Ableitung des Schlüssels in der weiteren Instanz vorgenommen wird. Hierzu können symmetrische oder asymmetrische kryptographische Verfahren verwendet werden. Symmetrische Kryptographie hat den Vorteil, dass nur ein Geheimnis in der weiteren Instanz vorhanden sein muss und die jeweils benötigte Ableitung bei Bedarf erstellt wird. Das potentiell unsichere mobile Endgerät erhält nur eine Ableitung, woraus das Geheimnis nicht rekonstruiert werden kann.

Das erfindungsgemäße System zur sicheren Interaktion eines Nutzers mit einem mobilen Endgerät und einer weiteren Instanz, eingerichtet zur Ausführung eines wie zuvor beschriebenen Verfahrens, umfasst
- ein Backend, in welchem ein Geheimnis oder eine durch eine Einwegfunktion erzeugte Abbildung des Geheimnisses und eines individuellen Datums von einem Nutzer gespeichert ist;
- ein mobiles Endgerät mit einer geschützten Ausführungsumgebung eines Prozessors, eingerichtet zur Speicherung der Abbildung und des individuellen Datums;
- eine sichere Benutzerschnittstelle des mobilen Endgeräts, eingerichtet zur Anmeldung und authentischen Interaktion des Nutzers;
- ein sicheres Element des mobilen Endgeräts, welches mit der geschützten Ausführungsumgebung eine sichere Verbindung aufweist; und
- eine weitere Instanz, eingerichtet zur geschützten Kommunikation mit dem sicheren Element des mobilen Endgeräts.

Das System kann eine oder mehrere der beschriebenen Komponenten umfassen. Insbesondere können mehrere mobile Endgeräte wie zum Beispiel Mobilfunkgeräte und/oder mehrere weitere Instanzen vorgesehen sein. Die weiteren Instanzen können auch unterschiedliche Geräte sein, mit denen gesichert kommuniziert werden soll oder muss. Es gelten die gleichen Vorteile und Modifikationen wie zuvor beschrieben.

Das mobile Endgerät und die weitere Instanz können eine Kommunikationsschnittstelle eines drahtlosen Kommunikationsstandards aufweisen. Dies können zum Beispiel eine oder mehrere Standards wie NFC (Near Feld Communication), Bluetooth, insbesondere LE (Low Energy), WLAN oder ähnliches sein.

Die weitere Instanz kann ein Fahrzeug sein. Das hier vorgestellte Verfahren und System eigenen sich insbesondere für Fahrzeuge, da bei Fahrzeugen sowohl ein flexibler und komfortabler Zugang als auch hohe Sicherheit von Bedeutung sind.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:

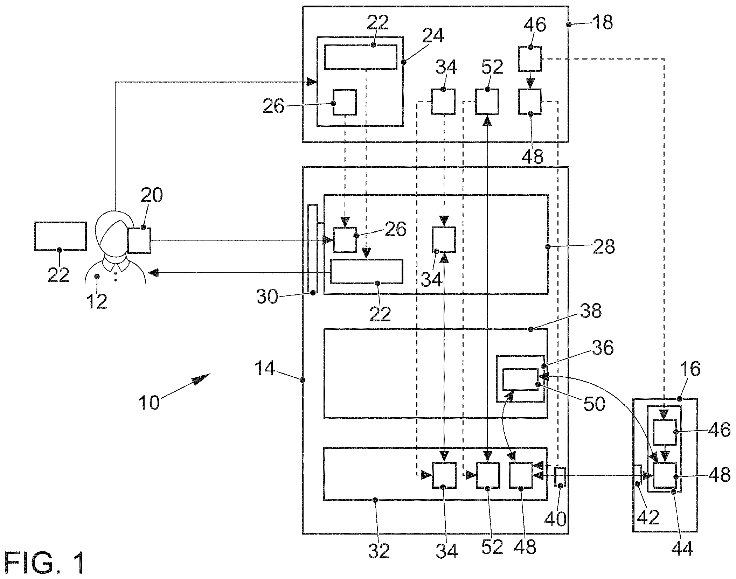

- Figur 1: eine schematische Darstellung eines Systems und Verfahrens zur sicheren Interaktion eines Nutzers mit einem mobilen Endgerät und einer weiteren Instanz.

Figur 1 zeigt eine schematische Darstellung eines Systems 10 zur sicheren Interaktion eines Nutzers 12 mit einem mobilen Endgerät 14, einer weiteren Instanz 16 und einem Backend 18. Der Nutzer 12 ist Nutzer und/oder Inhaber des mobilen Endgeräts 14, wie zum Beispiel einem Smartphone oder Tablet, sowie der weiteren Instanz 16. Im Folgenden wird die weitere Instanz als Fahrzeug 16 bezeichnet. Das Fahrzeug 16 kann zum Beispiel ein PKW, ein Nutzfahrzeug oder ein Motorrad sein. Alternativ kann die weitere Instanz jedoch auch ein beliebiges Gerät wie zum Beispiel ein Geldautomat oder ähnliches sein. Das Backend 18 kann zum Beispiel ein Zentralrechner oder Server sein oder diesen umfassen. Das Backend 18 gehört zu einem Hersteller des Fahrzeugs 16 oder zu einem Dienstanbieter.

Im Folgenden werden das System 10 sowie ein auf dem System 10 laufendes Verfahrens zur sicheren Interaktion beschrieben.

Zunächst wählt der Nutzer 12 ein Geheimnis 20 aus, das zum Beispiel ein Passwort und/oder ein biometrisches Merkmal wie ein Fingerabdruck sein kann. Dazu wählt er ein individuelles Datum 22, wie einen Text, ein Bild oder ähnliches. Bei einer Registrierung des Nutzers 12 an dem Backend 18 für eine Nutzung des Fahrzeugs 16 werden sowohl das Geheimnis 20 als auch das individuelle Datum 22 an das Backend 18 übertragen und dort in einer Datenbank 24 gespeichert. Anstelle des Geheimnisses 20 wird bevorzugt aus Sicherheitsgründen nicht das Geheimnis 20 gespeichert sondern eine Abbildung 26 des Geheimnisses 20. Die Abbildung 26 wird durch eine Einwegfunktion erzeugt, also kann das Geheimnis 20 nicht aus der Abbildung 26 zurückgerechnet werden. Die Abbildung 26 ist zum Beispiel eine Hashwert.

Danach findet ein Übertragen der Abbildung 26 und des individuellen Datums 22 von dem Backend 19 an eine geschützte Ausführungsumgebung 28 eines Prozessors oder SoCs des mobilen Endgeräts 14 statt. Dieses Übertragen ist durch gestrichelte Pfeile angedeutet und bedeutet, wie für alle gestrichelten Pfeile eine sichere Übertragung der im Backend 18 durch Registrierung hinterlegten oder dort generierten Geheimnisse in entsprechende Teilsysteme des mobilen Endgerätes 14 oder des Fahrzeuges 16. Die Absicherung dieser Datenübertragung geschieht zum Beispiel über während des Produktionsvorganges eingebrachte Geheimnisse.

Nun kann sich der Nutzer 12 an einer sicheren Benutzerschnittstelle 30 des mobilen Endgeräts 14 anmelden, wobei dem Nutzer 12 das individuelle Datum 22 angezeigt wird und wobei der Nutzer 12 sich mit dem Geheimnis 20 authentisiert. Die sichere Benutzerschnittstelle 30 ist zum Beispiel ein Touchscreen, der von der geschützten Ausführungsumgebung 28 als sicheres Gerät deklariert wurde oder wird und entsprechend behandelt wird.

Über das individuelle Datum 22 kann die geschützte Ausführungsumgebung 28 dem Nutzer 12 beweisen, dass seine Eingabemöglichkeit vertrauenswürdig ist. Der Nutzer 12 kann über sein Geheimnis 20 der geschützten Ausführungsumgebung 28 seine Identität beweisen. In der wird dann aus dem Geheimnis 20 eine Ableitung oder Abbildung vorgenommen und mit der Abbildung 26 verglichen. Wenn diese übereinstimmen ist die Identität des Nutzers 12 bewiesen. Somit findet eine gegenseitige Authentifizierung statt.

Somit ist eine sichere Verbindung zwischen dem Nutzer 12 und der geschützten Ausführungsumgebung 28 via der sicheren Benutzerschnittstelle 30 und mit Unterstützung des Backends 18 aufgebaut. Weder der Nutzer 12 noch das mobile Endgerät 14 müssen dauerhaft mit dem Backend 18 in Verbindung stehen. Es genügt theoretisch eine einmalige Verbindung, zum Beispiel über das Internet oder während der Produktion, um diese sichere Verbindung vorzubereiten.

Nach dem Aufbau dieser Verbindung kann die eigentliche Interaktion, wie eine Kommunikation oder die Übertragung von Daten oder Befehlen, stattfinden. Dazu interagiert der Nutzer 12 mit einem sicheren Element 32 des mobilen Endgeräts 14, welches mit der geschützten Ausführungsumgebung 28 eine sichere Verbindung aufweist. Diese Interaktion läuft wie zuvor beschrieben über die sichere Benutzerschnittstelle 30 und die geschützte Ausführungsumgebung 28. Das sichere Element 32 ist eine Recheneinheit zum Beispiel mit einer zumindest rudimentären Java-Umgebung, auf der unterschiedliche Cardlets laufen, welche zum Beispiel Steuerungen oder Bereiche des Fahrzeugs 16 abbilden.

Die bidirektionale Verbindung zwischen dem sicheren Element 32 und der geschützten Ausführungsumgebung 28 ist kryptographisch gesichert, zum Beispiel über ein Geheimnis 34, das oder dessen Ableitung sowohl in die sichere Benutzerschnittstelle 30 als auch in die geschützte Ausführungsumgebung 28 eingebracht wird. Denkbar ist eine symmetrische Kryptographie, zum Beispiel mit symmetrischen pre-shared Schlüsseln, oder eine asymmetrische Kryptographie, zum Beispiel mit privaten und öffentlichen Schlüsseln.

Aufgrund der sicheren Übertragung von Daten zwischen dem sicheren Element 32 und der geschützten Ausführungsumgebung 28 über das Geheimnis 34 können die Vorteile einer geschützte Ausführungsumgebung 28 mit der eines sicheren Elements 34 kombiniert werden. Die vertrauenswürdige Benutzerschnittstelle 30 mit ihrer geschützten Ausführungsumgebung 28 mit der Manipulationssicherheit des sicheren Elements 32. Erst wenn der Bedienwunsch des Nutzers 12 über eine beidseitig authentifizierte Relation Kunde zu geschützter Ausführungsumgebung 28 erfolgt ist, wird dies über den sicheren Pfad zwischen der geschützten Ausführungsumgebung 28 und dem sicheren Element 32 an das sichere Element 32 gemeldet.

Das sichere Element 32 kann nun zum Beispiel in einem bestimmten Zeitfenster Anfragen von einem Programm 36 in einem Betriebssystem 38 entgegen nehmen, das für sich dem sicheren Element 32 seine Identität nicht beweisen kann. Anders ausgedrückt erlaubt man Apps oder Programmen 36 den authentischen Zugriff auf das sichere Element 32 dadurch, dass zuvor eine authentische Benutzereingabe an der geschützten Ausführungsumgebung 28 erfolgt sein muss, die diesen Status gesichert an das sichere Element 32 weitergibt.

Das sichere Element 32 ist mit einer Schnittstelle 40, wie zum Beispiel einem NFC Controller verbunden. Das Fahrzeug 16 hat eine entsprechende Schnittstelle 42, so dass diese beiden Entitäten miteinander kommunizieren können. Das Fahrzeug 16 hat zudem mindestens ein Steuergerät 44, das zur Steuerung der Schnittstelle 42 beziehungsweise der Kommunikation und/oder der Steuerung weiterer Funktionen des Fahrzeugs 16 dienen kann.

Im Folgenden wird beschrieben wie die Verbindung zwischen dem sicheren Element 32 und dem Fahrzeug 16 geschützt ist. Hier ist ein Schlüssel 46 in dem Backend 18 erstellt sowie ein durch eine Ableitung erstellter abgeleiteter Schlüssel 48 vorhanden. Wie in Figur 1 gezeigt, wird nur das abgeleitete Geheimnis oder der abgeleitete Schlüssel 48 in das sichere Element 32 des mobilen Endgerätes 14 Kunden eingebracht. Das Fahrzeug 16 bekommt allerdings das Ursprungsgeheimnis oder den Schlüssel 46 eingebracht. Die Idee ist hier, dass sich das Fahrzeug 16 den abgeleiteten Schlüssel 48 im Rahmen des Authentisierungsvorganges selbst ad-hoc herleiten kann. Dazu muss die im Backend 18 verwendete Konstante zur Ableitung des abgeleiteten Schlüssels 48 von dem Schlüssel 46 zusätzlich in das sichere Element 32 eingebracht werden. Die Schlüsselableitungsfunktion liefert bei Eingabe dieser Konstante und des Schlüssels 46 immer eindeutig zum Ergebnis den abgeleiteten Schlüssel 48. Diese Konstante muss bei jedem Authentisierungsvorgang zwischen dem sicheren Element 32 und dem Fahrzeug 16 im Klartext vom sicheren Element 32 an das Fahrzeug 16 gesendet werden. Das Fahrzeug 16 kann sich daraufhin ad-hoc den abgeleiteten Schlüssel 48 herleiten, da der Schlüssel 46 bekannt ist. Nach Herleitung kann das Fahrzeug 16 den Authentisierungsbeweis vom sicheren Element 32 mit dem abgeleiteten Schlüssel 48 verifizieren und somit das sichere Element 32 authentifizieren. Der Vorteil dieser Idee liegt darin, dass das Fahrzeug 16 nur den Schlüssel 46 persistieren muss. Selbst wenn eine Vielzahl verschiedener mobiler Endgeräte gesicherte Verbindungen zum Fahrzeug 16 herstellen sollen, ist nur der Schlüssel 46 im Fahrzeug 16 zu speichern. Wie beschrieben hat jedes sichere Element 32 eine unterschiedliche einzigartige Konstante wie einen Byte String, die es dem Fahrzeug 16 bei der Authentisierung mitteilt, sodass sich dieses daraufhin den entsprechenden abgeleiteten Schlüssel 48 herleiten kann.

Somit kann eine Interaktion des sicheren Elements 32 mit der weiteren Instanz beziehungsweise dem Fahrzeug 16 über die oben beschriebene gesicherte Verbindung stattfinden. Zum Beispiel kann eine Sequenz zum Öffnen des Fahrzeugs 16 mittels eines Challenge-Response-Verfahrens durchgeführt werden.

Das Programm 36 kann eine Proxy-Funktion 50 umfassen, die es dem Programm 36 erlaubt, über das sichere Element 32 gesichert mit dem Fahrzeug 16 zu kommunizieren. Dazu werden zum einen die abgeleiteten Schlüssel 48 verwendet und zum anderen kann vorgesehen sein, dass wie zuvor beschrieben, das Programm 36 und/oder das Fahrzeug 16 an einer Kommunikation mit dem sicheren Elemente 32 nur teilnehmen dürfen, wenn durch den Nutzer 12 oder die geschützte Ausführungsumgebung 28 eine entsprechende Freigabe oder Vorgabe erfolgt ist.

Als weiteres Sicherheitselement ist die gesicherte authentische Verbindung zwischen dem Programm 36 und dem Backend 18 vorgesehen. Hierfür wird wie in Figur 1 gezeigt ein Geheimnis 52 verwendet, das im Backend 18 generiert und an das sichere Element 32 übertragen wird. Über das Geheimnis 52 kann das Programm 36 Daten von dem sicheren Element 32 verschlüsseln und/oder signieren lassen und anschließend zu dem Backend 18 senden, zum Beispiel per Mobilfunk wie LTE oder per WLAN zum Beispiel über das Internet. Diese Verbindung kann auch bidirektional ausgelegt sein.

Allein die sichere bidirektionale Kommunikation zwischen dem sicheren Element 30 und der geschützten Ausführungsumgebung 28 kann beispielsweise zahlreiche Angriffe verhindern und das generelle Sicherheitsniveau erhöhen. Für eine besonders sicherheitskritische Funktion, wie zum Beispiel die Verwendung des mobilen Endgeräts 14 als digitalen Fahrzeugschlüssel zum Beispiel über BTLE (Bluetooth Low Energy), werden im Folgenden exemplarisch drei mögliche Angriffe und deren Abwehr durch das beschriebene System und Verfahren erklärt.

In einem ersten Fall hat ein Angreifer Malware auf dem mobilen Endgerät 14 des Nutzers 12 installiert. Der Angreifer begibt sich nun in BTLE-Reichweite zum Fahrzeug 16 des Nutzers und lässt die Malware auf dem mobilen Endgerät 14 das Entriegeln-Kommando ausführen. Nun lässt sich der Angreifer von der Malware den Funkbefehl zum Entriegeln der Türen zumailen. Schließlich kann der Angreifer von seinem Smartphone das Entriegeln-Kommando per BTLE zum Fahrzeug 16 senden und sein Smartphone sich somit als korrekter Schlüssel ausgeben. Die hier vorgeschlagene sichere Übertragungskette kann das obige Szenario verhindern. Eine App-Oberfläche mit Entriegeln-Buttons liegt im sicheren Bereich, das heißt dem sicheren Element 32 und/oder der geschützten Ausführungsumgebung 28. Eine Bedienung des sicheren Bereiches ist nur über die sichere Benutzerschnittstelle 30 möglich. Nur wenn die Bedienung über die sichere Benutzerschnittstelle 30 erfolgt, wenn diese an den sicheren Bereich angebunden ist, wird ein Signal oder Bit gesetzt. Dieses Bit wird authentisch von der geschützten Ausführungsumgebung 28 zu dem sicheren Element 32 übermittelt. Das sichere Element 32 berechnet nur dann eine Response auf die Challenge von dem Fahrzeug 16, wenn es kurz zuvor ein von der der geschützten Ausführungsumgebung 28 authentisch übermitteltes Bit erhalten hat.

In einem zweiten Fall meldet sich der Nutzer 12 mit einer App an einem Dienst an, um Schlüssel zu verwalten. Ein Angreifer hat Malware auf dem mobilen Endgerät 14 installiert und schneidet die Zugangsdaten des Nutzers 12, wie zum Beispiel die E-Mail Adresse, das Passwort und eine Super-PIN, mit. Dann loggt sich der Angreifer im Namen des Nutzers 12 bei dem Dienst ein und schickt Fahrzeugschlüssel an sein eigenes Smartphone. Schließlich stiehlt der Angreifer das Fahrzeug 16 des Nutzers 12.

Die hier vorgeschlagene sichere Übertragungskette kann auch dieses Szenario verhindern. Der Nutzer 12 muss sich bei der Registrierung zu dem Dienst einmalig beim Dienstanbieter verifizieren lassen. In diesem Kontext wählt sich der Nutzer 12 ein individuelles Datum 22 aus, zum Beispiel ein selbst gezeichnetes Bild. Dieses wird vom Händler über eine eigene Backendverbindung in die Backendsysteme 18 übertragen und für den Nutzer 12 gespeichert. Bei der Provisionierung des mobilen Endgeräts 14 wird diese Grafik in die geschützte Ausführungsumgebung 28 des mobilen Endgeräts 14 übertragen. Wenn der Nutzer 12 sich in die App des Dienstes einloggt, wird der Login-Screen über die sichere Benutzerschnittstelle 30 dargestellt. Damit der Nutzer 12 dies weiß, wird seine individuelle Grafik angezeigt. Der Nutzer 12 kann nun E-Mail und Kennwort eingeben, aber keine Malware kann diese Daten mitschneiden, da sie über die sichere Benutzerschnittstelle 30 eingegeben werden, die in der geschützten Ausführungsumgebung 28 ein getrennten und sicheren Speicherbereich hat.

In einem dritten Fall hat ein Angreifer Malware auf dem mobilen Endgerät 14 installiert. Der Angreifer nutzt das sichere Element 32 als Orakel, um möglichst viele Challenge/Response Paare zu sammeln. Wenn der Angreifer genügend Paare gesammelt hat, begibt sich zum Fahrzeug 16 und entriegelt es.

Die hier vorgeschlagene sichere Übertragungskette kann auch dieses Szenario verhindern. Hier kann zum Beispiel eine Eigenschaft der drahtlosen Übertragung zwischen dem mobilen Endgerät 14 und dem Fahrzeug 16 genutzt werden. Zum Beispiel hat ein NFC-System den Vorteil, dass ein Cardlet einer zumindest rudimentären Java-Umgebung unterscheiden kann, ob eine Anfrage von dem Host OS oder einer Antenne stammt. Um ein äquivalentes Sicherheitsniveau bei BTLE zu erreichen, müssten die geschützte Ausführungsumgebung 28 und das sichere Element 32 authentisch und vertraulich miteinander Daten austauschen können, was hier gegeben ist. Somit würde man nur den Zugriff auf das sicheren Element 32 durch die geschützten Ausführungsumgebung 28 erlauben. Und die geschützte Ausführungsumgebung 28 muss sich dem sicheren Element 32 gegenüber authentisiert haben (und umgekehrt). Nutzt man dies mit der sicheren Benutzerschnittstelle 30, also dem Schalten des Touchscreens in die Secure World, kann nur nach erfolgter Interaktion mit der eigentlichen App ein Trigger erfolgen. Und jeglicher Trigger durch Software, also Malware im Host OS kann von dem sicheren Element 32 abgelehnt werden, da er nicht über die geschützte Ausführungsumgebung 28 erfolgt ist.

Wie zuvor gezeigt, fügt die Erfindung mobile Endgeräte in ein ganzheitliches Sicherheitsmodell zur Kommunikation mit einem Backend und Fahrzeugen ein, so dass eine sichere Übertragungskette entsteht, welche die Sicherheit verbessert.

### Bezugszeichenliste

- 10: System
- 12: Nutzer
- 14: mobiles Endgerät
- 16: weitere Instanz
- 18: Backend
- 20: Geheimnis
- 22: individuelles Datum
- 24: Datenbank
- 26: Abbildung
- 28: geschützte Ausführungsumgebung
- 30: sichere Benutzerschnittstelle
- 32: sicheres Element
- 34: Geheimnis
- 36: Programm
- 38: Betriebssystem
- 40: Schnittstelle
- 42: Schnittstelle
- 44: Steuergerät
- 46: Schlüssel
- 48: abgeleiteter Schlüssel
- 50: Proxy
- 52: Geheimnis

## Patentansprüche

1. Verfahren zur sicheren Interaktion eines Nutzers (12) mit einem mobilen Endgerät (14) und einer weiteren Instanz (16), wobei die weitere Instanz (16) ein Fahrzeug ist, mit den Schritten:
- Übertragen eines Geheimnisses (20) oder einer durch eine Einwegfunktion erzeugten Abbildung (26) des Geheimnisses (20) und eines individuellen Datums (22) von dem Nutzer (12) an ein Backend (18), wobei entweder die Abbildung (26) des Geheimnisses von dem Nutzer (12) an das Backend (18) übertragen wird oder die Abbildung (26) des Geheimnisses durch das Backend (18) basierend auf dem Geheimnis (20) erzeugt wird;
- Übertragen der Abbildung (26) des Geheimnisses (20) und des individuellen Datums (22) von dem Backend (18) an eine geschützte Ausführungsumgebung (28) eines Prozessors des mobilen Endgeräts (14), wobei die geschützte Ausführungsumgebung ein sogenanntes "Trusted Execution Environment" ist;
- Anmelden des Nutzers (12) an einer sicheren Benutzerschnittstelle (30) des mobilen Endgeräts (14), wobei dem Nutzer (12) das individuelle Datum (22) angezeigt wird um dem Nutzer (12) zu beweisen, dass seine Eingabemöglichkeit vertrauenswürdig ist, und wobei der Nutzer (12) sich mit dem Geheimnis (20) authentisiert;
- Interaktion des Nutzers (12) mit einem sicheren Element (32) des mobilen Endgeräts (14), wobei das sichere Element ein sogenanntes "Secure Element" ist, welches mit der geschützten Ausführungsumgebung (28) eine sichere Verbindung aufweist, über die sichere Benutzerschnittstelle (30) und die geschützte Ausführungsumgebung (28); und
- Interaktion des sicheren Elements (32) mit der weiteren Instanz (16) über eine gesicherte Verbindung, wobei in einem Betriebssystem (38) des mobilen Endgeräts (14) ein Programm (36) zur Interaktion mit der weiteren Instanz (16) ausgeführt wird und wobei das Programm (36) über das sichere Element (32) mit der weiteren Instanz (16) interagiert.

2. Verfahren nach Anspruch 1, **dadurch gekennzeichnet, dass** die sichere Benutzerschnittstelle (30) von der geschützten Ausführungsumgebung (28) als sicheres Gerät deklariert wird.

3. Verfahren nach einem der vorhergehenden Ansprüche, **dadurch gekennzeichnet, dass** die Verbindung zwischen der geschützten Ausführungsumgebung (28) und dem sicheren Element (32) mittels aus dem Backend (18) bezogener Schlüssel (34) geschützt wird.

4. Verfahren nach einem der Ansprüche 1 bis 3, **dadurch gekennzeichnet, dass** zwischen dem Backend (18) und dem Programm (36) eine über das sichere Element (32) laufende sichere Verbindung aufgebaut wird.

5. Verfahren nach einem der Ansprüche 1 bis 4, **dadurch gekennzeichnet, dass** das sichere Element (32) eine Kommunikationsschnittstelle für das Programm (36) und eine Kommunikationsschnittstelle für die weitere Instanz (16) aufweist und dass in Abhängigkeit von der Interaktion des Nutzers (12) die Fähigkeiten mindestens einer Kommunikationsschnittstelle konfiguriert werden.

6. Verfahren nach einem der vorhergehenden Ansprüche, **dadurch gekennzeichnet, dass** für eine sichere Kommunikation zwischen dem mobilen Endgerät (14) und der weiteren Instanz (16) ein Schlüssel (46) in dem Backend (18) und in der weiteren Instanz (16) vorhanden ist, dass eine Ableitung (48) des Schlüssels (46) in das sichere Element (32) eingebracht wird und dass für eine authentische Verbindung eine Ableitung (48) des Schlüssels (46) in der weiteren Instanz (16) vorgenommen wird.

7. System zur sicheren Interaktion eines Nutzers (12) mit einem mobilen Endgerät (14) und einem Fahrzeug, eingerichtet zur Ausführung eines Verfahrens nach einem der vorstehenden Ansprüche, umfassend
- ein Backend (18), in welchem ein Geheimnis (20) oder eine durch eine Einwegfunktion erzeugte Abbildung (26) des Geheimnisses (20) und eines individuellen Datums (22) von einem Nutzer (12) gespeichert ist;
- ein mobiles Endgerät mit einer geschützten Ausführungsumgebung (28) eines Prozessors, eingerichtet zur Speicherung der Abbildung (26) und des individuellen Datums (22), wobei die geschützte Ausführungsumgebung ein sogenanntes "Trusted Execution Environment" ist;
- eine sichere Benutzerschnittstelle (30) des mobilen Endgeräts (14), eingerichtet zur Anmeldung und authentischen Interaktion des Nutzers (12);
- ein sicheres Element (32) des mobilen Endgeräts (14), welches mit der geschützten Ausführungsumgebung (28) eine sichere Verbindung aufweist, wobei das sichere Element ein sogenanntes "Secure Element" ist; und
- eine weitere Instanz (16), die ein Fahrzeug ist, eingerichtet zur geschützten Kommunikation mit dem sicheren Element (32) des mobilen Endgeräts (14).

8. System nach Anspruch 7, **dadurch gekennzeichnet, dass** das mobile Endgerät (14) und die weitere Instanz (16) eine Kommunikationsschnittstelle (40, 42) eines drahtlosen Kommunikationsstandards aufweisen.

## Claims

1. Method for secure interaction of a user (12) with a mobile terminal (14) and a further entity (16), wherein the further entity (16) is a vehicle, comprising the steps of:
- transmitting a secret (20) or an image (26) of the secret (20) generated by a one-way function, and an individual datum (22) of the user (12) to a backend (18), wherein either the image (26) of the secret is transferred by the user (12) to the backend (18), or the image (26) of the secret is generated by the backend (18) based on the secret (20);
- transmitting the image (26) of the secret (20) and of the individual datum (22) from the backend (18) to a protected execution environment (28) of a processor of the mobile terminal (14), wherein the protected execution environment is what is known as a "trusted execution environment;"
- logging in the user (12) at a secure user interface (30) of the mobile terminal (14), wherein the individual datum (22) is displayed to the user (12) in order to demonstrate to the user (12) that their input possibility is trustworthy, and wherein the user (12) is authenticated with the secret (20);
- interaction of the user (12) with a secure element (32) of the mobile terminal (14), wherein the secure element is what is known as a "secure element," which has a secure connection with the protected execution environment (28), via the secure user interface (30) and the protected execution environment (28); and
- interaction of the secure element (32) with the further entity (16) via a secured connection, wherein, in an operating system (38) of the mobile terminal (14), a program (36) for interaction with the further entity (16) is executed, and wherein the program (36) interacts with the further entity (16) via the secure element (32).

2. Method according to Claim 1, **characterized in that** the secure user interface (30) is declared by the protected execution environment (28) as a secure device.

3. Method according to any one of the preceding claims, **characterized in that** the connection between the protected execution environment (28) and the secure element (32) is protected by means of keys (34) obtained from the backend (18).

4. Method according to any one of Claims 1 to 3, **characterized in that** a secure connection running via the secure element (32) is established between the backend (18) and the program (36).

5. Method according to any one of Claims 1 to 4, **characterized in that** the secure element (32) has a communication interface for the program (36) and a communication interface for the further entity (16), **and in that** the capabilities of at least one communication interface are configured depending on the interaction of the user (12).

6. Method according to any one of the preceding claims, **characterized in that** a key (46) is present in the backend (18) and in the further entity (16) for secure communication between the mobile terminal (14) and the further entity (16); **in that** a derivation (48) of the key (46) is introduced into the secure element (32); **and in that** a derivation (48) of the key (46) is performed in the further entity (16) for an authenticated connection.

7. System for secure interaction of a user (12) with a mobile terminal (14) and a vehicle, configured to execute a method according to any one of the preceding claims, comprising
- a backend (18), in which is stored a secret (20) or an image (26) of the secret (20) generated by a one-way function, and an individual datum (22) of a user (12);
- a mobile terminal with a protected execution environment (28) of a processor, configured to store the image (26) and the individual datum (22), wherein the protected execution environment is what is known as a "trusted execution environment;"
- a secure user interface (30) of the mobile terminal (14), configured for logging in and authenticated interaction of the user (12);
- a secure element (32) of the mobile terminal (14), which has a secure connection with the protected execution environment (28), wherein the secure element is what is known as a "secure element;" and
- a further entity (16), which is a vehicle, configured for protected communication with the secure element (32) of the mobile terminal (14).

8. System according to Claim 7, **characterized in that** the mobile terminal (14) and the further entity (16) have a communication interface (40, 42) of a wireless communication standard.

## Revendications

1. Procédé d'interaction sécurisée d'un utilisateur (12) avec un terminal mobile (14) et une autre entité (16), l'autre entité (16) étant un véhicule, comprenant les étapes de :
- transmission d'un secret (20) ou d'une représentation (26) du secret (20) générée par une fonction unidirectionnelle et une date individuelle (22) de l'utilisateur (12) à un système principal (18), soit la représentation (26) du secret de l'utilisateur (12) étant transmise au système principal (18) soit la représentation (26) du secret étant générée sur la base du secret (20) par le système principal (18) ;
- transmission de la représentation (26) du secret (20) et de la date individuelle (22) à partir du système principal (18) à un environnement d'exécution (28) protégé d'un processeur du terminal mobile (14), l'environnement d'exécution protégé étant un dénommé « Trusted Execution Environment » ;
- connexion de l'utilisateur (12) à une interface utilisateur (30) sécurisée du terminal mobile (14), la date individuelle (22) étant montrée à l'utilisateur (12) pour prouver à l'utilisateur (12) que sa possibilité de saisie est digne de confiance et l'utilisateur (12) s'authentifiant avec le secret (20) ;
- interaction de l'utilisateur (12) avec un élément sécurisé (32) du terminal mobile (14), l'élément sécurisé étant un dénommé « Secure Element », lequel présente une connexion sécurisée avec l'environnement d'exécution (28) protégé, à travers l'interface utilisateur (30) sécurisée et l'environnement d'exécution (28) protégé ; et
- interaction de l'élément sécurisé (32) avec l'autre entité (16) à travers une connexion sécurisée, un programme (36) d'interaction avec l'autre entité (16) étant exécuté dans un système d'exploitation (38) du terminal mobile (14) et le programme (36) interagissant avec l'autre entité (16) à travers l'élément sécurisé (32).

2. Procédé selon la revendication 1, **caractérisé en ce que** l'interface utilisateur (30) sécurisée est déclarée comme dispositif sécurisé par l'environnement d'exécution (28) protégé.

3. Procédé selon l'une quelconque des revendications précédentes, **caractérisé en ce que** la connexion entre l'environnement d'exécution (28) protégé et l'élément sécurisé (32) est protégée au moyen d'une clé (34) acquise au moyen du système principal (18).

4. Procédé selon l'une quelconque des revendications 1 à 3, **caractérisé en ce qu'une** connexion sécurisée passant à travers l'élément sécurisé (32) est établie entre le système principal (18) et le programme (36).

5. Procédé selon l'une quelconque des revendications 1 à 4, **caractérisé en ce que** l'élément sécurisé (32) présente une interface de communication pour le programme (36) et une interface de communication pour l'autre entité (16) et **en ce que** les capacités d'au moins une interface de communication sont configurées en fonction de l'interaction de l'utilisateur (12).

6. Procédé selon l'une quelconque des revendications précédentes, **caractérisé en ce que,** pour une communication sécurisée entre le terminal mobile (14) et l'autre entité (16), une clé (46) existe dans le système principal (18) et dans l'autre entité (16), **en ce qu'**une dérivée (48) de la clé (46) est introduite dans l'élément sécurisé (32) **et en ce que,** pour une connexion authentique, une dérivée (48) de la clé (46) est réalisée dans l'autre entité (16).

7. Système d'interaction sécurisée d'un utilisateur (12) avec un terminal mobile (14) et un véhicule, conçu pour l'exécution d'un procédé selon l'une quelconque des revendications précédentes, comprenant
- un système principal (18), dans lequel un secret (20) ou une représentation (26) du secret (20) générée par une fonction unidirectionnelle et une date individuelle (22) sont enregistrés par un utilisateur (12) ;
- un terminal mobile comprenant un environnement d'exécution (28) protégé d'un processeur, conçu pour l'enregistrement de la représentation (26) et de la date individuelle (22), l'environnement d'exécution protégé étant un dénommé « Trusted Execution Environment » ;
- une interface utilisateur (30) sécurisée du terminal mobile (14), conçue pour la connexion et l'interaction authentique de l'utilisateur (12) ;
- un élément sécurisé (32) du terminal mobile (14), lequel présente une connexion sécurisée avec l'environnement d'exécution (28) protégé, l'élément sécurisé étant un dénommé « Secure Element » ; et
- une autre entité (16), laquelle est un véhicule, conçue pour la communication sécurisée avec l'élément sécurisé (32) du terminal mobile (14).

8. Système selon la revendication 7, **caractérisé en ce que** le terminal mobile (14) et l'autre entité (16) présentent une interface de communication (40, 42) d'une norme de communication sans fil.
